# EUROPEAN PATENT APPLICATION

(11) **EP 1 884 824 A1**
(43) Date of publication of application: **06.02.2008**
(21) Application number: 07108077.4
(22) Date of filing: 11.05.2007
(51) Int. Cl.: G02F 1/13357, G02B 27/09

(54) **Backlight unit and display apparatus having the same**

(30) Priority: 31.07.2006 KR 20060071940
(71) Applicant: SAMSUNG ELECTRONICS CO., LTD., Suwon-si, Gyeonggi-do 442-742 (KR)
(72) Inventor: Lee, Kye-hoon 848-203, Byeokjeokgol 8danji, Yeongtong-gu, Suwon-si, Gyeonggi-do (KR); Cho, Kun-ho, Gwonseon-gu, Suwon-si, Gyeonggi-do (KR)
(74) Representative: Robinson, Ian Michael

(57) **Abstract**

A display apparatus includes a display panel (110) and a backlight which supplies the display panel (110) with light. The backlight unit includes a lighting source (100); a light converting unit (200) which converts light emitted from the lighting source (100) into uniform light; and a light incidence angle controlling unit (300) which increases an angle of incidence of the light entering the light converting unit (200).

## Description

Apparatuses consistent with the present invention relates to a backlight unit and a display apparatus having the same.

Generally, liquid crystal displays comprise a liquid crystal display panel having a plurality of liquid crystal cells arrayed in a matrix form, and a plurality of control switches that convert video signals sent to each of the plurality of liquid crystal cells. The liquid crystal display panel controls transmittance of light from a backlight unit so as to display images.

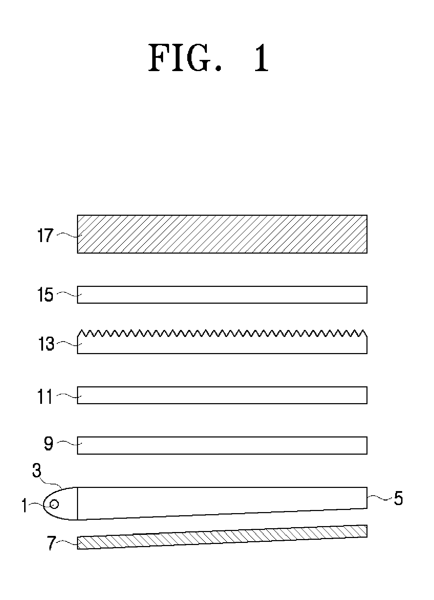

Referring to Figure 1, a related art backlight unit comprises a lighting source 1 for generating light, a housing 3 configured to wrap around the lighting source 1, a light guide plate 5 converting light entering from the lighting source 1 into light distributed over the surface of the light guide plate 5, a reflector sheet 7 that is disposed under the light guide plate 5 and reflects light emitted from the bottom of the light guide plate 5 toward the top of the light guide plate 5, a first diffusing plate 9 for diffusing light passing through the light guide plate 5, first and second prisms 11 and 13 for controlling a direction of light passing through the first diffusing plate 9, and a second diffusing plate 15 for diffusing light passing through the second prism 13.

The related art backlight unit mainly uses a cold cathode fluorescent lamp as the lighting source 1. For decreasing a loss of light from the lamp and diffusing light to the liquid crystal display panel 17, the related art backlight unit needs to have the various parts as described above between the lighting source 1 and the liquid crystal display panel 17, and therefore, it has a complex structure. Also, because light emitting from the lamp has to pass through the various parts, transmittance efficiency of light is decreased so that a picture quality of the liquid crystal display having the related art backlight unit is decreased.

According to the present invention there is provided an apparatus and method as set forth in the appended claims. Preferred features of the invention will be apparent from the dependent claims, and the description which follows.

The present invention has been developed in order to overcome the above drawbacks and other problems associated with the conventional arrangement. An aspect of the present invention is to provide a backlight unit that has a small number of parts so as to have a simple structure, and to increase transmittance efficiency for light, thereby realizing a clear picture quality, and a display apparatus having the same.

The above aspect and/or other aspects of the present invention can substantially be achieved by providing a backlight unit, including a lighting source; a light converting unit which converts light emitted from the lighting source into uniform light; and a light incidence angle controlling unit which increases an angle of incidence of the light entering the light converting unit.

The light converting unit may include a light tunnel having an inner surface formed of mirrors and open entry and exit sides.

The light incidence angle-controlling unit may include at least one refractive lens disposed in a light path between the lighting source and the light converting unit.

The backlight unit may further include a light-magnifying unit which magnifies the uniform light emitted from the light converting unit.

The light-magnifying unit may include at least one projection lens disposed in a light path between the light converting unit and display panel.

The backlight unit may further include a lens unit refracting the light magnified by the light-magnifying unit such that the light emitted from the lens unit is vertically incident on the display panel.

The lens unit may include a Fresnel lens disposed between the light magnifying unit and the display panel.

The backlight unit may further include a diffusing member, disposed between the lens unit and the display panel, which diffuses the light emitted from the lens unit.

The backlight unit may further include a light path-changing unit which changes a light path of the uniform light emitted from the light converting unit so that the uniform light is directed to the display panel.

The light path-changing unit may include a reflex mirror disposed between the light converting unit and the display panel.

The reflex mirror may be inclined by a predetermined angle with respect to the display panel.

The reflex mirror may include either a plane mirror or a curved mirror.

The backlight unit may include a plurality of lighting sources.

The display panel may include a liquid crystal display, and the lighting source may be a laser lighting source.

The above aspect and/or other feature of the present invention can substantially be achieved by providing a display apparatus, which includes a display panel; and a backlight unit, having a structure as described above, which supplies the display panel with light.

Other objects, advantages and salient features of the invention will become apparent from the following detailed description, which, taken in conjunction with the annexed drawings, discloses exemplary embodiments of the invention.

These and/or other aspects of the invention will become apparent and more readily appreciated from the following detailed description of the exemplary embodiments, taken in conjunction with the accompanying drawings of which:
Figure 1 is a schematic view illustrating a related art backlight unit;
Figure 2 is a schematic view illustrating a display apparatus having a backlight unit according to an exemplary embodiment of the present invention; and
Figure 3 is a perspective view illustrating a light-converting unit of the backlight unit of Figure 2.

Throughout the drawings, like reference numerals refer to like parts, components and structures.

Hereinafter, a backlight unit and a display apparatus having the same according to certain exemplary embodiments of the present invention will be described in detail with reference to the accompanying drawings.

The matters defined in the description, such as a detailed construction and elements thereof, are provided to assist in a comprehensive understanding of the invention. Thus, it is apparent that the present invention may be carried out without those defined matters. Also, well-known functions or constructions are omitted to provide a clear and concise description of exemplary embodiments of the present invention.

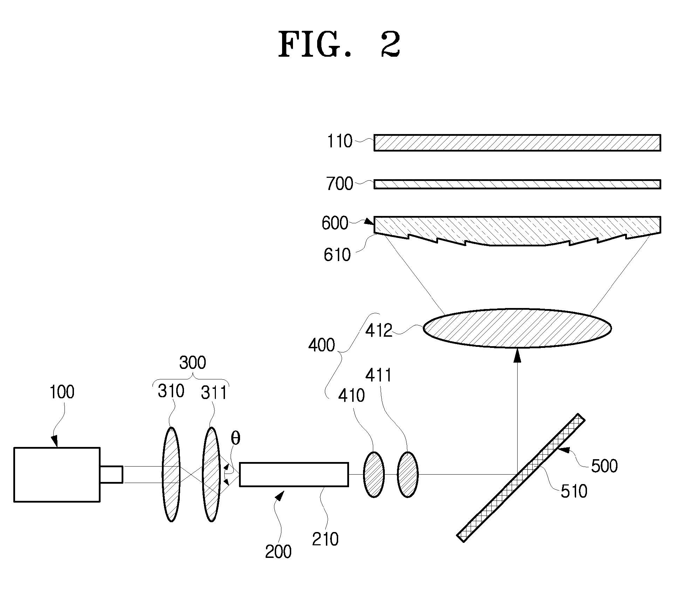

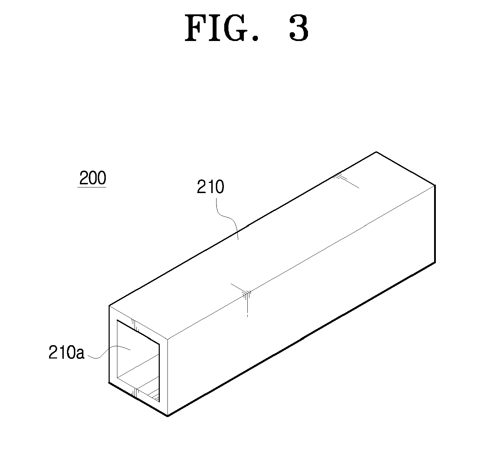

Figure 2 is a schematic view illustrating a display apparatus having a backlight unit according to an embodiment of the present invention, and Figure 3 is a perspective view illustrating a light-converting unit of the backlight unit of Figure 2.

Referring to Figures 2 and 3, the backlight unit according to an embodiment of the present invention includes a lighting source 100, a light-converting unit 200, a light incidence angle-controlling unit 300, a light-magnifying unit 400, and a light path-changing unit 500.

The lighting source 100 uses lasers having an excellent light linearity. In this embodiment, the laser lighting source 100 is a white lighting source generating a white light. Alternatively, a plurality of lighting sources, for example, a red lighting source, a green lighting source, and a blue lighting source, which emit red light, green light, and blue light, respectively, may be used for generating a white light.

The light converting unit 200 includes a light tunnel 210 having open entry and exit sides. The inner surface of the light tunnel 210 includes mirrors 210a. The light tunnel 210 may have the cross sectional shape of a polygon, a circle, or another shape. The light tunnel 210 may also have a square cross-section. The light tunnel 210 converts light emitted from the lighting source 100 into uniform light. Because the light tunnel 210 is a well-known technique, the detailed descriptions thereof will be omitted.

The light incidence angle-controlling unit 300 increases the angle θ of incidence of light entering the light tunnel 210. The light incidence angle-controlling unit 300 may have at least one refractive lens disposed in the light path between the lighting source 100 and the light tunnel 210. In this embodiment, two convex lenses 310 and 311 are disposed in a line.

The light-magnifying unit 400 magnifies the uniform light emitted from the light tunnel 210 by a predetermined size to enter the display panel 110. The display panel 110 may be a liquid crystal display panel. The light-magnifying unit 400 includes at least one projection lens 410, 411, and 412 disposed in the light path between the light tunnel 210 and the display panel 110.

The light path-changing unit 500 changes the light path of the uniform light emitted from the light tunnel 210 so that the uniform light is directed to the display panel 110. The light path-changing unit 500 includes a reflex mirror 510 that is disposed between the light tunnel 210 and the display panel 110, and reflects light emitted from the light tunnel 210 to the display panel 110. The reflex mirror 510 is inclined by a predetermined angle with respect to the display panel 110, and may have either a plane reflecting surface or a curved reflecting surface. In this embodiment as shown in Figure 2, the reflex mirror 510 is disposed among the plurality of projection lenses 410, 411, and 412; however, this arrangement should not be considered as limiting. Alternatively, the reflex mirror 510 may be disposed between the light tunnel 210 and the projection lens 410 or between the projection lens 412 and the display panel 110.

A lens unit 600 is disposed between the display panel 110 and the light-magnifying unit 400. The lens unit 600 causes light magnified by the light-magnifying unit 400 to enter the display panel 110 vertically (normal to the surface of the display panel). The lens unit 600 may be a Fresnel lens 610. The Fresnel lens 610 consists of concentric rings of segmental lenses functioning as a prism, and has small aberration. Because Fresnel lenses 610 are well-known, detailed descriptions thereof will be omitted.

A diffusing member 700 may be disposed between the display panel 110 and the lens unit 600. The diffusing member 700 diffuses light passing through the lens unit 600 into the display panel 110.

In the backlight unit according to an embodiment of the present invention having the structure as described above, light emitted from the laser lighting source 100 enters the light tunnel 210 with the angle θ of incidence increased by the light incidence angle controlling unit 300 disposed between the lighting source 100 and the light tunnel 210. When light passes through the light tunnel 210, the light is reflected by the mirror 210a of the inner surface of the light tunnel 210. At this time, the light is mixed due to a large angle of incidence thereof so as to be emitted from the light tunnel 210 as uniform light. The uniform light emitted from the light tunnel 210 is magnified by a predetermined amount by the projection lenses 410, 411, and 412. Then, the uniform light passes through the Fresnel lens 610, and is vertically incident on the display panel 110. The reflex mirror 510 disposed between the light tunnel 210 and the display panel 110 may change the light path of the uniform light emitted from the light tunnel 210. The light passing through the Fresnel lens 510 is diffused by the diffusing member 700 and is then incident on the display panel. When the light enters the display panel 110, the display panel 110 controls the transmittance of R, G, and B in each of a plurality of pixels so as to display images.

With the backlight unit according to an embodiment of the present invention, using a laser with an excellent light linearity as the lighting source 100 decreases the number of parts of the backlight unit so that the backlight unit has a simple structure and good transmittance efficiency for light. Also, because increasing the angle θ of incidence of the laser light improves the uniformity of the light, the backlight unit according to the present invention allows the display panel 110 to have a good color reproduction and to display clear images.

The present invention also provides a display apparatus having the backlight unit according to an embodiment of the present invention includes the display panel 110, and the backlight unit as described above supplying the display panel 110 with light.

With the present invention as described above, because a laser with an excellent light linearity is used as a lighting source, the backlight unit has a simple structure and good transmittance efficiency for light.

Also, because increasing the angle of incidence of the laser light improves the uniformity of the light, the exemplary display apparatus according to the present invention has a good color reproduction, and can display clear images.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A backlight unit comprising:
a lighting source (100);
a light converting unit (200) which converts light emitted from the lighting source (100) into uniform light; and
a light incidence angle controlling unit (300) which increases an angle of incidence of light entering the light converting unit (200).

2. The backlight unit of claim 1, wherein the light converting unit (200) comprises a light tunnel (210) having an inner surface formed of mirrors (210a) and open entry and exit sides.

3. The backlight unit of claim 1 or 2, wherein the light incidence angle controlling unit (300) comprises at least one refractive lens (310, 311) disposed in a light path between the lighting source (100) and the light converting unit (200).

4. The backlight unit of any preceding claim, further comprising:
a light magnifying unit (400) which magnifies the uniform light emitted from the light converting unit (200).

5. The backlight unit of claim 4, wherein the light magnifying unit (400) comprises at least one projection lens (410, 411, 412) disposed in a light path between the light converting unit (200) and a display panel (110).

6. The backlight unit of claim 4 or 5, further comprising:
a lens unit (600) which refracts light magnified by the light magnifying unit (400) such that light emitted from the lens unit (600) is vertically incident on a display panel (110).

7. The backlight unit of claim 6, wherein the lens unit (600) comprises a Fresnel lens (610) disposed between the light magnifying unit (400) and the display panel (110).

8. The backlight unit of claim 6 or 7, further comprising:
a diffusing member (700), disposed between the lens unit (600) and the display panel (110), which diffuses the light emitted from the lens unit (600).

9. The backlight unit of any preceding claim, further comprising:
a light path changing unit (500) which changes a light path of the uniform light emitted from the light converting unit (200) so that the uniform light is directed to a display panel (110).

10. The backlight unit of claim 9, wherein the light path changing unit (500) comprises a reflex mirror (510) disposed between the light converting unit (200) and the display panel (110).

11. The backlight unit of claim 10, wherein the reflex mirror (510) is inclined by a predetermined angle.

12. The backlight unit of claim 10, wherein the reflex mirror (510) comprises at least one of a plane mirror and a curved mirror.

13. The backlight unit of any preceding claim, wherein the lighting source (100) comprises a plurality of lighting sources.

14. The backlight unit of any preceding claim, wherein the lighting source (100) comprises a laser lighting source.

15. A display apparatus comprising:
a display panel (110); and
a backlight unit which supplies the display panel (110) with light, wherein the backlight unit is arranged according to any of claims 1 to 14.

16. The display apparatus of claim 15, wherein the reflex mirror (510) is inclined by a predetermined angle with respect to the display panel (110).

17. The display apparatus of claim 15 or 16, wherein the display panel (110) comprises a liquid crystal display.
